# EUROPEAN PATENT SPECIFICATION

(11) **EP 4 381 580 B1**
(45) Date of publication and mention of the grant of the patent: **08.10.2025**
(21) Application number: 22808847.2
(22) Date of filing: 28.10.2022
(51) Int. Cl.: H02J 3/38, H02J 4/00, H02J 15/00

(54) **SYSTEM AND METHOD FOR PROVIDING ELECTRICAL POWER FROM A WIND TURBINE TO A HYDROGEN PRODUCTION SYSTEM**
SYSTEM UND VERFAHREN ZUR BEREITSTELLUNG VON ELEKTRISCHER ENERGIE VON EINER WINDTURBINE AN EIN WASSERSTOFFERZEUGUNGSSYSTEM
SYSTÈME ET PROCÉDÉ POUR FOURNIR DE L'ÉNERGIE ÉLECTRIQUE D'UNE ÉOLIENNE À UN SYSTÈME DE PRODUCTION D'HYDROGÈNE

(30) Priority: 02.11.2021 EP 21205936
(43) Date of publication of application: 12.06.2024
(73) Proprietor: Siemens Gamesa Renewable Energy A/S, 7330 Brande (DK)
(72) Inventor: GOLDENBAUM, Nikolaus, 8680 Ry (DK); GROENDAHL, Erik, 8653 Them (DK); THISTED, Jan, 8830 Tjele (DK)
(74) Representative: SGRE-Association
(86) International application number: PCT/EP2022/080256
(87) International publication number: WO 2023/078799

(56) References cited:
- WO-A1-2010/048706
- DE-U1- 212018 000 414
- US-A1- 2014 021 785

## Description

### FIELD OF THE INVENTION

The present invention relates to a system configured to provide electrical power from a wind turbine to a hydrogen production system, in which an electrical power transport system provides an electrical power transport path. It further relates to a method of providing electrical power from a wind turbine to a hydrogen production system.

### BACKGROUND

The use of wind energy is proliferating. In general, a wind farm comprises an AC collector grid by means of which it feeds electrical power into the power grid, for example via a respective substation including a substation transformer. The AC collector grid and the power grid generally operate at a predefined grid frequency, for example at 50 Hz or 60 Hz. To reduce structural loads, modern wind turbines are configured as variable speed turbines, so that the generator of such wind turbine operates at variable rotational speeds. To provide the desired AC frequency of the generated electrical power, full converter topologies are employed, which convert all of the generated electrical power, or DFIG topologies are employed, in which a converter is connected to a rotor of the generator and controls the AC slip frequency of the generator by controlling the rotor currents. 20% to 40% of the generated power thereby flows through the power converter. Furthermore, a wind turbine transformer is generally provided that steps up the voltage level provided by the converters to the voltage level of the AC collector grid.

Such grid connected wind turbines have to follow strict rules to be compliant with various grid requirements or grid codes. To meet these requirements, the power from the wind turbine generator thus undergoes several frequency and voltage conversion steps, as well as filtering, before the electrical power is fed into the electrical power grid.

A problem arises if the power production by the wind farm is higher than the demand from the power grid, or if the grid capacity is insufficient. To make use of the available electrical power, hydrogen production facilities are connected to the electrical power grid. The hydrogen production can be based on the electrical energy provided by renewable energy sources, for example by respective power purchase agreements (PPAs). The produced hydrogen may then be stored or may be transported to a site where it is needed.

It is desirable to improve the energy efficiency of such hydrogen production. Furthermore, it is desirable to reduce the cost and complexity involved in providing electrical power to such hydrogen production facility. It is in particular desirable to provide an efficient, resource-saving and cost-effective production of hydrogen.

The document DE 21 2018 000414 U1 relates to a hydrogen generation system comprising at least one wind turbine, at least one electrolysis device and at least one compressor system downstream of the electrolysis device. The at least one wind turbine locally provides generated electrical power to the at least one electrolysis device.

The document US 2014/0021785 A1 relates to the supply of an electric equipment, the supply being provided in priority by an intermittent battery so that a fuel cell electrochemical generating unit is used as little as possible. Supplied by the source, fuel in the generation unit is produced when the power of the source exceeds the operation power of the equipment and the batteries are in full charge.

The document WO 2010/048706 A1 is related to systems for distributing electric power from a wind farm generating medium to high voltage AC electricity or generating medium voltage DC electricity to multiple electrolyser modules for producing hydrogen.

### SUMMARY

Accordingly, there is a need to mitigate at least some of the drawbacks mentioned above and to make such hydrogen production more efficient and/or cost-effective.

This need is met by the features of the independent claims, which define the scope of the invention.

The dependent claims describe embodiments of the invention.

According to an aspect, a system configured to provide electrical power from a wind turbine to a hydrogen production system is provided. The system comprises at least one electrical transport system, which is associated with the wind turbine and provides an electrical power transport path configured to transport electrical power from a generator of the associated wind turbine to the hydrogen production system.

The electrical power transport system comprises an AC (alternating current) section coupled to the generator, a DC (direct current) section coupled to the hydrogen production system, and an AC to DC converter coupled between the AC section and the DC section. The AC to DC converter is arranged outside the wind turbine. The AC section of the electrical power transport system is configured to operate at variable AC frequency.

By such system, the transporting of electrical energy from the generator to the hydrogen production system may be made more efficient. In particular, as the AC section of the transport system operates at variable AC frequency, an electric power conversion to achieve a predefined AC frequency may not be necessary. Consequently, respective power converters can be saved, making the arrangement less complex and more cost-effective. Furthermore, conversion losses can be avoided. As the AC-to-DC converter is arranged outside the wind turbine, for example close to the hydrogen production system, the electrical energy may be transported via the AC section from the generator to the hydrogen production system. Such transport may essentially occur without conversion, and may in particular occur without additional power conversion or power transformation. This may result in a reduction of investment costs and in electrical power losses originating from power conversion and transportation.

For example, the whole AC section, i.e. between the generator and the AC-to-DC converter, may be operable at variable frequency, i.e. all sections that transport AC electrical power of the power transport path may operate at variable AC frequency. No AC-to-AC conversion may thus be necessary, and may thus not be present.

The AC section may be configured such that electrical power of different AC frequencies is transported on the AC section. In other words, during operation the AC frequency of the electrical power may vary.

The AC-to-DC converter may be installed at the site of the hydrogen production system. It may for example form together with the hydrogen production system a central hydrogen production facility. The AC section of the electrical power transport path may be configured to transport the electrical power from the generator to the site of the hydrogen production system. The electrical power may thus be received at the site of the hydrogen production system without power conversion, and may only there be converted to DC electrical power for driving e.g. electrolyzers. For example, an AC cable, in particular a high-voltage cable, may be provided from the wind turbine to the site of the hydrogen production system for effecting the respecting power transfer, the power being transported at variable AC frequency on the cable.

In some examples, the system can include multiple of such electrical power transport systems that are separate and that for example each feed a separate hydrogen production system, e.g. an electrolyzer, from a respective wind turbine.

According to the invention, the system comprises at least two electrical power transport systems, each electrical power transport system being associated with a different wind turbine. The DC section of a first of the at least two electrical power transport systems and the DC section of a second of the at least two electrical power transport systems is electrically coupled (in particular connected) and is configured to supply electrical power to the (same) hydrogen production system. The hydrogen production system may thus be centralized and may receive electrical power from plural wind turbines, which may provide advantages with respect to the flexibility of operation. Furthermore, the water supply and hydrogen collection may be centralized for hydrogen produced from the energy of plural wind turbines, compared to a system in which electrolyzers are provided locally at each wind turbine. A wind park may for example have a group of wind turbines providing electrical power by respective electrical power transport systems to the hydrogen production system, or all wind turbines of such wind park may provide their electrical power to the hydrogen production system.

As outlined below, the AC sections of the at least two electrical power transport systems are electrically separated from each other

According to the invention, the AC section of each of the at least two electrical power transport systems are separate and distinct from the AC sections of all of the other of the at least two electrical power transport systems, they are not electrically connected. Consequently, it may not be required to synchronize the AC frequencies used in the different electrical power transport systems, i.e. the AC frequencies given out by the different generators of the different wind turbines. A simple system configuration without AC/AC conversion may thus be maintained, in particular by providing the coupling of the DC sections. As the wind turbine generators do not need to be connected to a power grid, and as the generators may be de-synchronized from each other, they can be operated at variable generator rotational speed. Also, different types of generators may be used operating at different rotational speeds and/or different AC voltage levels.

In an example, the system may comprise a DC bus. The DC section of each of the at least two electrical power transport systems may be electrically coupled, in particular connected, to the DC bus. A simple and efficient coupling may thus be implemented. The hydrogen production system may also be electrically coupled, in particular connected, to the DC bus. Electrical power may thus be efficiently distributed to the hydrogen production system, for example to a central electrolyzer or to plural individual electrolyzers of such system. The DC bus may be considered to form part of the DC section of each transport system. The voltage on the DC bus, with which the hydrogen production system is supplied, may for example lie within the range of 400 V to about 10 kV DC, e.g. between 400 V and 1.500 V DC. In other examples, no DC bus may be used, and/or the DC voltage level used in the DC section may be a high voltage level (e.g. higher than 1 kV).

The DC bus may for example be provided by a DC bus bar. Efficient distribution of electrical power may thus be achieved. In some examples, the DC bus may comprise plural bus sections and a bus coupler provided between the bus sections (e.g. a series of bus couplers and bus sections). The DC section of each electrical power transport system may be coupled, in particular connected, to (or may comprise) a different bus section. Such configuration may allow an electrical isolating of a particular bus section, including the connected transport system and possibly a connected electrolyzer.

In an example, the hydrogen production system may comprise plural electrolyzers. At least one electrolyzer may be coupled to each of two or more of the bus sections. In some examples, one or more electrolyzers are coupled to each bus section, whereas in other examples, some bus sections may not be coupled to an electrolyzer. A flexible configuration may thus be achieved.

In an example, the AC section of the electrical power transport system may comprise a transformer configured to provide transformation from a higher AC transport voltage to a lower AC voltage, wherein the lower voltage side of the transformer (i.e. the side providing the lower AC voltage) may be coupled, in particular (directly) connected, to the AC-to-DC converter. It should be clear that the higher AC transport voltage is higher than the lower AC voltage. Such configuration may allow a transport of the electrical power at relatively high AC voltage via the AC section of the transport path, and may provide the desired AC voltage level for the AC-to-DC converter.

In an example, the transformer may be arranged outside the wind turbine, for example at a site of the hydrogen production system. For example, the AC-to-DC converter and the transformer may be comprised within a central hydrogen production facility that includes the hydrogen production system. Such facility may for example be provided at a central site of a wind park.

In an example, the AC section may in particular provide transport of the electrical power from the wind turbine to the site of the hydrogen production system, it may for example include an AC cable connected between the wind turbine and the transformer arranged at the hydrogen production system. In some examples, no further converter or transformer may be coupled or connected in the transport path between the generator and the transformer at the hydrogen production site.

The AC section may in particular connect the associated wind turbine to a central hydrogen production facility that comprises the AC to DC converter and the hydrogen production system; the central hydrogen production facility may further comprise the transformer configured to step down the AC transport voltage to the lower voltage. Central means that the facility collects power generated by two, three, four or more wind turbines. The facility may further be located at a central site of the wind park.

It should be clear that some or each of plural electrical energy transport systems of the system may comprise a respective transformer.

In some examples, the AC section of the electrical power transport system may comprise a wind turbine transformer configured to provide transformation from a lower AC voltage output by the generator to a higher AC transport voltage. Such wind turbine transformer may for example be arranged within the wind turbine or at a site of the wind turbine. The use of such wind turbine transformer may have advantages when the level of the AC voltage generated by the generator is too low for an efficient transport, for example in case of a multipole generator, e.g. for a direct drive configuration having a slow running generator with multiple poles. The AC voltage can thus be stepped up to the desired transport voltage level. If the system includes plural electrical power transport systems, none of these, some of these, or all of these may include a respective wind turbine transformer. This may depend on the generator used in the respective wind turbine.

In an example, the higher AC transport voltage may be higher than 1 kV, preferably higher than 2 kV, more preferably higher than 10 kV. It may for example lie within the range of 10 kV to 100 kV. The desired transport voltage level may be chosen in dependence on the distance between the wind turbine and the hydrogen production facility, and/or based on the capability of the generator.

In an example, the generator coupled to the electrical power transport system may be a high-voltage generator. In such configuration, no stepping-up of the AC voltage may be required in the AC section of the transport path. The high-voltage generator may for example provide an AC output voltage above 1 kV, preferably above 2 kV, more preferably above 5 kV, or even above 10 kV. For example, the AC output voltage may lie within a range of 1.000 V to 100 kV, in particular 5 kV to 100 kV, or 10 kV to 100 kV (e.g. 10 kV to 80 kV; a 70 kV generator may for example be used). Designated AC voltages may be RMS values. If the system comprises at least two electrical power transport systems, none, some, or all of the generators may be high-voltage generators. Accordingly, different types of generators may be employed with the system, and a wind turbine transformer may be omitted for the wind turbines that comprise high-voltage generators.

The system may comprise the generator(s) of the respective wind turbine.

In an example, the generator may be configured to provide a (substantially) constant output voltage. For example, the generator may comprise an AVR (automatic voltage regulator) to regulate the output voltage of the generator, e.g. by controlling excitation current. By using a relatively constant voltage level of the AC voltage, transformer operation may be optimized, and the loading of electrolyzers of the hydrogen production system may be optimized. In other examples, the generator may be configured to provide a variable output voltage that varies with generator speed. In such examples, both frequency and voltage of the AC electrical power generated by the generator may vary. A relatively constant voltage/frequency relationship may thereby be provided. Such voltage variation may result in a respective variation of the current density of an electrolyzer of the hydrogen production system, and thus in a corresponding variation of the load applied by the electrolyzer. Accordingly, less regulation of the electrolyzer load may be required in such configurations. This may in particular apply to permanent magnet (PM) excited generators for which AVR regulation is not available.

The generator coupled to the electrical power transport system (or to at least one transport system if two or more electrical power transport systems are provided) may be selected from the group comprising or consisting of: a synchronous generator, an AVR-regulated generator, a permanent magnet synchronous generator (PMSG), a direct drive multipole generator, e.g. a PMSG in a direct drive wind turbine, a high-speed generator, medium speed generator, a low speed generator, an induction generator, and the like. In an example, the generator may be an AVR-regulated synchronous generator, it may be a two, four, six or more pole generator. In another example, the generator may be a multi-pole PMSG generator, e.g. of a direct drive wind turbine. In the latter case, a respective wind turbine transformer is preferably provided to step-up the AC voltage produced by the generator.

The system may be configured to keep a generator frequency of the generator within a predetermined frequency range during operation. For example, the AC frequency of the output voltage may be kept within a range having a lower border between 10 and 40 Hz and an upper border between 50 and 70 Hz. The AC frequency of the AC section may be allowed to vary at least within the range of 45 to 55 Hz, preferably 40 to 60 Hz, more preferably 30 to 60 Hz, e.g. between 20 Hz and 60 Hz.

In an example, the hydrogen production system may comprise a central electrolyzer configured to receive electrical power from plural electrical power transport systems each associated with a respective wind turbine. In other examples, the hydrogen production system may be a modular electrolyzer system comprising plural electrolyzers configured to receive electrical power from plural electrical power transport systems each associated with a respective wind turbine (which may be separate systems, or which may be coupled via a common DC bus, as explained above). The number of electrolyzers may match the number of wind turbines, but it is also conceivable to provide more electrolyzers or fewer electrolyzers than wind turbines. It should be clear that the number of electrolyzers is independent of the number of wind turbines that feed electrical power to the hydrogen production system. In any case, the central electrolyzer or the plural electrolyzers can be integrated with the respective AC-to-DC converters and the above-mentioned transformers in a central hydrogen production facility.

A modular approach for the hydrogen production system may allow a simpler up-scaling of the hydrogen production system and the standardization of the electrolyzers, e.g. in form of standardized electrolyzers modules.

In an example, the system may further comprise a control system configured to control the operation of the hydrogen production system. The control system may be configured to control the load applied by the hydrogen production system to the one or more electrical power transport systems, i.e. to the associated wind turbines. The hydrogen production system may comprise plural electrolyzers, and the control system may be configured to activate or deactivate electrolyzers in dependence on the availability of electrical power provided by the at least one electrical transport system to the hydrogen production system. Additionally or alternatively, the control system may be configured to adjust the power intake of one or more electrolyzers of the hydrogen production system in dependence on the availability of the electrical power provided by the at least one electrical power transport system. It may for example adjust the current densities of the electrolyzers. The latter also applies when only a single central electrolyzer is provided.

Adjusting the number of active electrolyzers in dependence on the available electrical power may have the advantage that the active electrolyzers can be operated close to their nominal operating power. On the other hand, adjusting the power intake of the electrolyzers may have advantages in situations in which the wind turbines provide a variable voltage output. Lower wind speeds may result in corresponding lower rotational speeds and thus lower AC voltages, which in turn results in lower current densities in the electrolyzers, thus providing a certain extent of self-regulation of the applied electrical load.

According to a further aspect, a method of providing electrical power from a wind turbine to a hydrogen production system according to claim 14 is provided. The AC to DC converter may be arranged outside the wind turbine. The AC section of the electrical power transport system may be configured to operate at variable AC frequency.

The method may be performed by the system having any of the configurations described herein. The method may further comprise any of the steps described herein with respect to the system. Likewise, the system may be configured to carry out the method of any of the embodiments and examples disclosed herein.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a system for providing electrical power from a wind turbine to a hydrogen production system according to an embodiment.
Fig. 2 is a schematic drawing showing a system for providing electrical power from a wind turbine to a hydrogen production system according to an embodiment.
Fig. 3 is a schematic drawing showing a system for providing electrical power from a wind turbine to a hydrogen production system according to an embodiment.
Fig. 4 is a schematic drawing showing a system for providing electrical power from a wind turbine to a hydrogen production system according to an embodiment.
Fig. 5 is a flow diagram illustrating a method of providing electrical power from a wind turbine to a hydrogen production system according to an embodiment.

### DETAILED DESCRIPTION

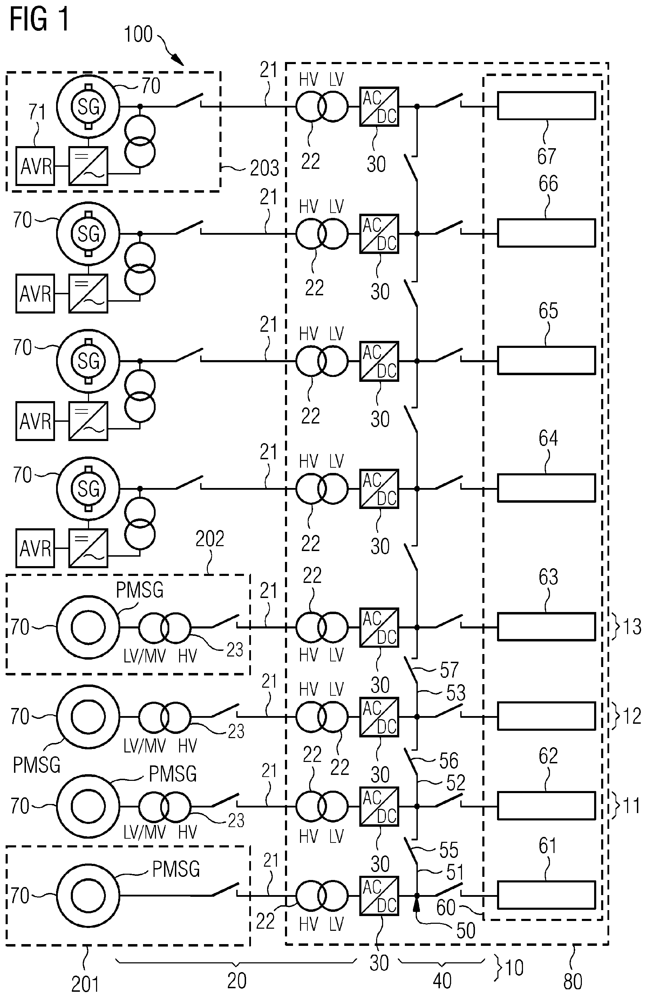

Fig. 1 schematically illustrates a system 100 which provides electrical power from plural wind turbines 201, 202, 203 to a hydrogen production system 60. Each wind turbine comprises a generator 70 that generates electrical power from rotation of a wind turbine rotor, the rotational mechanical energy being received directly (in a direct drive wind turbine) or indirectly via respective gearbox (not shown) by the generator. Although only three wind turbines are indicated in Fig. 1, it should be clear that the other generators 70 may likewise be comprised in respective wind turbines. The system 100 comprises at least two electrical power transport systems 10, 11, but may comprise further such transport systems 12, 13, .... The electrical power transport system 10 provides an electrical power transport path from the generator 70 of wind turbine 201 to the hydrogen production system 60. The system 10 comprises an AC section 20, in which the electrical power is transported as AC electrical power, an AC-to-DC converter 30, and a DC section 40 on which electrical power is transported in form of DC electrical power. Each of the other electrical power transport systems 11, 12, 13, ..., in particular the respective electrical power transport path, correspondingly comprise a respective AC section 20, an AC-to-DC converter 30 and a DC section 40.

The AC-to-DC converter 30 may be located outside the respective wind turbine 201, and may preferably be located at the site of the hydrogen production system 60, it may for example be comprised within a central hydrogen production facility 80. Accordingly, the AC section 20 may be provided to transport the electrical power essentially from the wind turbine 201 to the central facility 80. It may comprise a respective AC cable 21 that connects the wind turbine 201 to the central hydrogen production facility 80.

The AC section 20 may be configured to be operated at variable AC frequency. Accordingly, no AC-to-AC conversion has to be performed for transporting the electrical power from wind turbine 201 to the hydrogen production system 60. In particular, it is not necessary to meet specific grid codes or the like in order to transport the AC electrical power, and it is in particular not required to provide the electrical power at a particular grid frequency, such as 50 Hz or 60 Hz. Accordingly, no respective power converters need to be provided in the AC section 20, thus reducing investment costs and electrical losses caused by respective power conversion. In some examples, the generator 70 may be a high-voltage generator, and may for example generate AC voltage at a voltage level above 1 kV, above 5 kV, or even above 10 kV, e.g. between 1kV and 70kV. Accordingly, the voltage level may be high enough so that it does not need to be stepped-up for transportation to the hydrogen production system 60. No step-up transformer may thus be provided in the AC section 20. The wind turbine 201 may in particular not comprise a respective wind turbine transformer and may not comprise any converter or filter for the generated AC electrical power in such configurations. AC power transport cable 21 may thus more or less directly be connected to the high-voltage generator 70 (with respective intervening circuit breakers). It should be clear that the configuration of the generator 70 may be selected in accordance with the desired voltage level, which may be selected in dependence on the distance over which the AC electrical power needs to be transported.

In the example of figure 1, the wind turbine 203 for example comprises a synchronous generator 70, which is implemented as a high voltage generator. Accordingly, no wind turbine transformer is provided in the wind turbine 203.

The generator 70 may be provided with a system that stabilizes the output voltage of the generator. For example, an automatic voltage regulator (AVR) 71 can be provided. The AVR 71 regulates the excitation current of the generator 70 to maintain a stable output voltage. The excitation current may for example be provided by an AC to DC converter that is controlled by the AVR and that receives AC electrical power from an output of the generator via a transformer, as illustrated for wind turbine 203 of figure 1. The voltage regulation may in particular include a brushless magnetization circuit. The generator 70 may for example be of the high-speed type, e.g., a 2, 4 or 6 pole generator, or may be a medium speed generator.

In other examples, the generator may output a lower voltage, for example the generator 70 of wind turbine 202 of figure 1. Depending on the distance between the wind turbine 202 and the hydrogen production facility 80, a wind turbine transformer 23 may be provided to step up the generated AC voltage to a higher AC transport voltage. The AC transport voltage may for example be higher than 5kV, preferably higher than 10kV. The AC electrical power can thus be transported efficiently via the AC section 20 to the facility 80 even if the generator 70 has a relatively low voltage output.

For example, the generator 70 may be implemented as a permanent magnet synchronous generator (PMSG). Such generator may for example be employed in a direct drive wind turbine in which the generator is directly driven by the wind turbine rotor without intervening gear box. The generator may in particular be a low speed generator, e.g., a multipole generator. Using the wind turbine transformer 23, the relatively low voltage generated by such generator can be stepped up to the desired level.

In some examples, the generator may be configured to provide a variable output voltage, which may for example vary with the rotational speed to the generator 70. For example, for a PM excited generator 70, an AVR regulation cannot be employed, so that its output voltage may vary. As both frequency and voltage may thus vary as a function of the rotor speed, a relatively constant voltage / frequency relationship may be obtained. The lower voltage may result in a lower current density of the electrolyzer(s) of the hydrogen production system 60, so that the electrical load applied by these electrolyzers may decrease as the rotational speed of the generator (and thus the power generation) decreases. Controlling the electrolyzer(s) so as to match the applied load to the available electrical power generated by the generators 70 of the wind turbines may thus be facilitated.

Likewise, if the voltage is kept constant and the AC frequency is variable, the load applied by the electrolyzer(s) is controlled to match the available power production of the wind turbines, as outlined in more detail further below.

The AC transport voltage may be higher than the nominal input voltage of the AC to DC converter 30, and/or higher than a nominal operating voltage of one or more electrolyzers of the hydrogen production system 60. Accordingly, a respective step down transformer 22 may be provided in the AC section 20, for example at the site of the hydrogen production system 60. Transformer 22 may for example be arranged in the centralized hydrogen production facility 80. Transformer 22 may be configured to step down the higher AC transport voltage to a lower AC voltage level suitable as input for converter 30 and electrolyzer 61, for example to an AC voltage level of less than 2 kV, preferable less than 1.5 or 1 kV (e.g. to a low voltage level).

The AC section 20 may accordingly include an AC electrical connection between the wind turbine and the hydrogen production facility 80, the transformer 22, and optionally the wind turbine transformer 23.

The stepped-down AC voltage is provided to the AC-to-DC converter 30. The converter 30 may be implemented in any of the known ways. It may be an active or passive rectifier. For example it may be a passive six pulse or twelve pulse rectifier. As another example, it may be an active rectifier that employs IGBTs (insulated gate bipolar transistors) for switching.

The electrical power transport system 10 further includes the DC section 40 which transports the converted DC electrical power to the hydrogen production system 60. DC section 40 may be comprised in the hydrogen production facility 80. It may be a direct electrical connection with an intervening circuit breaker. At least two of electrical power transport systems 10, 11, 12, 13 are electrically connected, via their respective DC sections 40.

For example, the DC section 40 may be coupled to or may include a DC bus 50 that provides the coupling between the different DC sections 40. The DC bus 50 can be provided by a common DC busbar. The DC bus 50 can be separated into bus sections 51, 52, 53, ... that are connectable by respective bus couplers 55, 56, 57, ... . Consequently, it is possible to electrically isolate a bus section from the remaining bus sections, for example in case of a fault or for the purpose of maintenance. In the example of figure 1, each electrical power transport system 10, 11, 12, ... is connected to one bus section; in other implementations, plural transport systems may be connected to one bus section, or some bus sections may not have a transport system connected thereto.

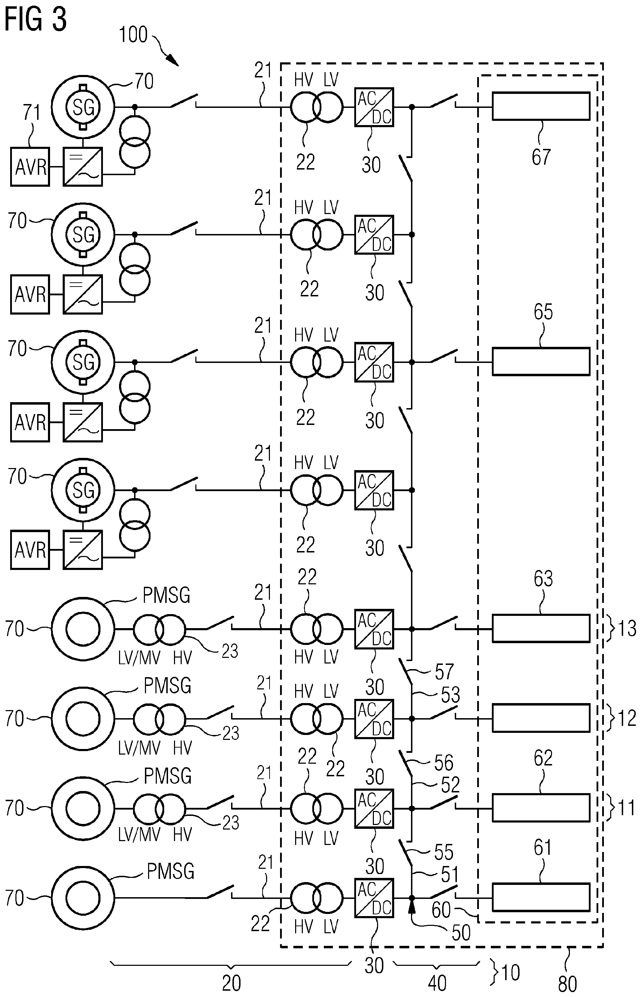

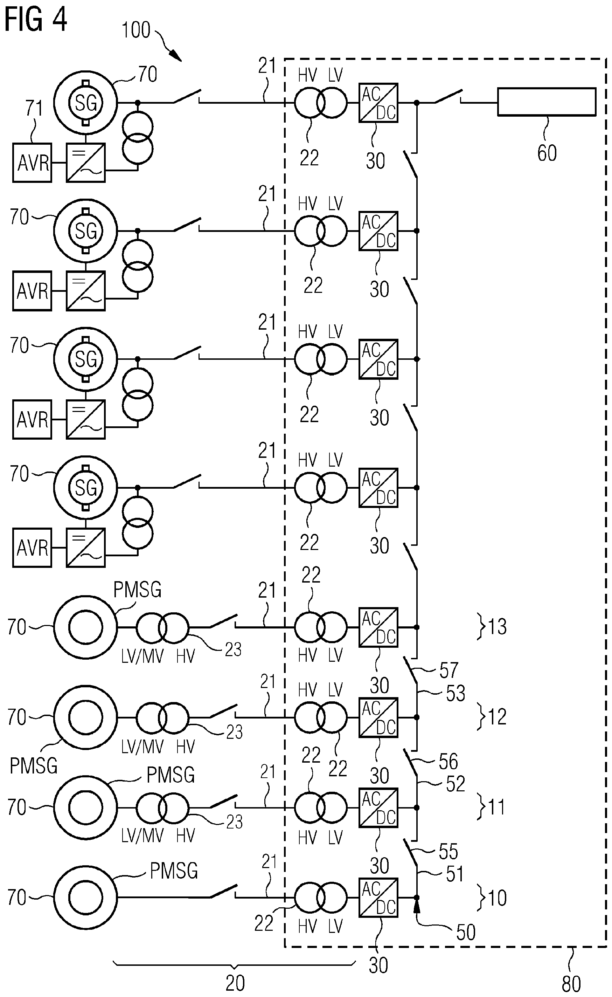

The hydrogen production system 60 may be coupled, in particular electrically connected, to the DC section 40, for example to the DC bus 50. The DC busbar may be capable of supplying a larger electrolyzer system. As illustrated in figure 1, the hydrogen production system 60 may comprise plural electrolyzers 61, 62, 63, 64, 65, 67, and each electrolyzer may be connected to the DC bus 50. For example, one electrolyzer may be connected to each bus section, as shown in figure 1, or plural electrolyzers may be connected to one bus section, or some bus sections may not have an electrolyzer connected thereto (as shown in figure 3). The hydrogen production system 60 may also include a single large electrolyzer that may be connected to DC bus 50, as shown in figure 4. The DC bus 50 may allow the powering of such large load from plural wind turbines 201, 202, 203, ....

The system 100 comprises the generator(s) 70. The system 100 also comprises the hydrogen production system 60. The electrolyzer and the generator may not form part of the electrical power transport system 10, 11, 12, 13, ... .

The AC sections 20 of different electrical power transport systems 10, 11, 12, 13, ... are not electrically connected. This allows the AC frequency to be different on the different AC sections 20, so that the generators 70 can be de-synchronized, i.e. the rotor speed of all connected wind turbines can be different. When operating the wind turbines, the rotor speed and thus the generator speed may be controlled by the pitch control system. As the rotor speed defines the AC frequency of the generated power, this frequency will not be constant, but vary in a certain range. By keeping the AC sections 20 separate, the system may thus allow for individual variable speed of the wind turbines without requiring AC to AC converters in the wind turbines. Higher structural loads on the wind turbines, in particular during gust wind conditions, may thus be avoided.

During operation, the generator frequency may be kept within certain limits, e.g., between 20Hz and 60Hz. The voltage and frequency may be controlled to optimize the system, e.g. keeping constant voltage/frequency relationship to optimize the one or more transformers and/or the loading of the electrolyzers.

Providing a sufficiently high AC transport voltage on the AC section 20, e.g. by a respective high voltage generator, may allow for centralization of several electrolyzers fed from several wind turbines, e.g. in a centralized hydrogen production facility 80. Having a centralized group of electrolyzers supplied with power from several wind turbines located at an appropriate distance may have the advantage that the water supply and hydrogen collection can be centralized, compared to having a local electrolyzer at each turbine.

In some examples, the electrical power transport systems 10, 11, 12, 13, ... may be separate , at least two are electrically connected at their respective DC sections. Each wind turbine may for example feed a separate electrolyzer module.

However, the coupling of the transport systems by their DC sections may be beneficial, as it allows an improved distribution of the electrical power generated by plural wind turbines among plural electrolyzers.

In the example of figure 1, the hydrogen production system 60 comprises one electrolyzer for each wind turbine. In the example of figure 3, fewer electrolyzers than wind turbines are provided. In other examples, the hydrogen production system 60 may comprise or may consist of only a single large electrolyzer 61, as shown in figure 4, which is fed from plural wind turbines. It should be clear that there does not need to be a specific relation between the number of electrolyzers and the number of wind turbines. As an example, the number of electrolyzers in the hydrogen production system 60 can vary from a single large electrolyzer to 10 or more electrolyzer modules for a group of any number of wind turbines.

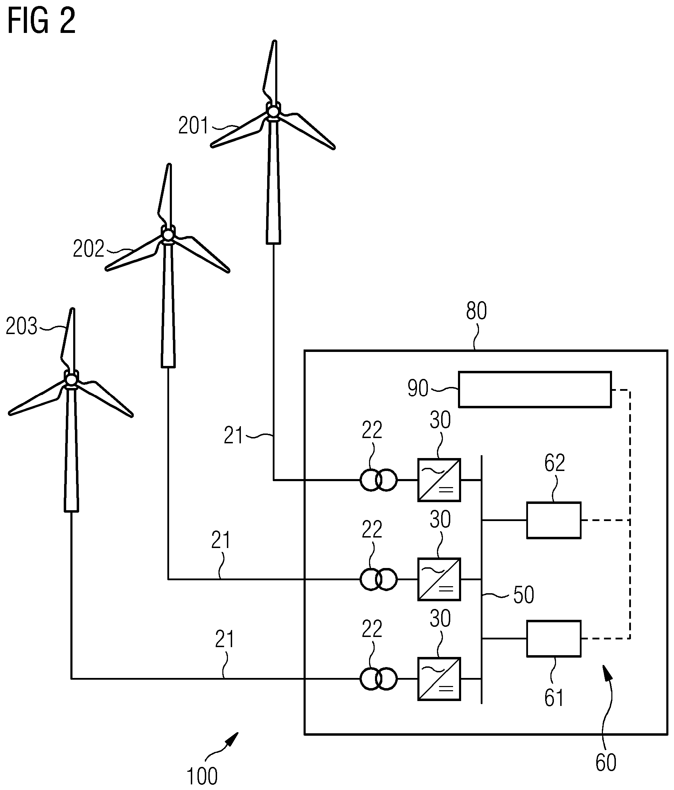

Figure 2 illustrates an example of the system 100 of figure 1, so that the above explanations are equally applicable. As can be seen, the AC power cables 21 connect the wind turbines 201, 202, 203 to the centralized hydrogen production facility 80. The electrical power is thus transported to the facility 80 via the AC sections 20, i.e. via the respective AC cables 21 thereof. Facility 80 may be centralized as it receives electrical power from plural wind turbines; further it may be arranged at a central site of the wind farm to reduce the distance over which the AC electrical power needs to be transported. It should be clear that a wind farm may also include plural, e.g. two or more, centralized facilities 80, each receiving electrical power from a group of wind turbines of the wind farm.

The system 100 may include a control system 90, which may control the operation of the hydrogen production system 60. The control system 90 may be implemented on a wind farm level, it may for example form part of a wind farm controller. It may also be a control system that is specific to the facility 80. The control system 90 may in particular control the electrical load applied by the hydrogen production system 60 on the electrical power transport systems and thus on the wind turbines. The hydrogen production system 60 can include plural electrolyzers, in particular electrolyzer modules, and the control system 90 may activate or deactivate electrolyzer modules to increase or decrease, respectively, the electrical load applied by hydrogen production system 60. For example, at lower wind speeds, the number of active electrolyzer modules can be reduced compared to the number of wind turbines. This may allow an optimal operation load on the electrolyzers during various wind turbine power production levels.

Additionally or alternatively, the control system 90 may be configured to control the power intake of individual electrolyzers 61, 62, 63, ..., or of a single large electrolyzer as shown in figure 4. This may for example occur by adjusting the current density in the respective electrolyzer, for which any known means may be employed. If the generated AC voltage is allowed to vary, a respective voltage variation of the DC voltage at the electrolyzer input may result, which can result in a corresponding variation of the electrolyzer currents. Accordingly, in low wind conditions, the voltage may drop, resulting in lower electrolyzer currents, so that the applied electrical load is to some extend self-adjusting.

The control system 90 may include a processing unit, e.g. a microprocessor, and a memory, e.g. RAM, flash memory, a hard disc drive and the like, storing control instructions which when executed by the processing unit, cause the control system to perform any of the control methods or steps disclosed herein.

It should be clear that the electrolyzers 61, 62, 63 may receive water and may produce hydrogen gas, which is not illustrated in the figures.

As indicated in figures 1-3, the hydrogen production system 60 may be implemented as a modular system with plural electrolyzer modules. This may facilitate an upscaling of the hydrogen production system 60 and may allow a standardization of such modules, resulting in lower costs. Further, it may allow a continued system operation in case single units of wind turbines or electrolyzers are shut down for service.

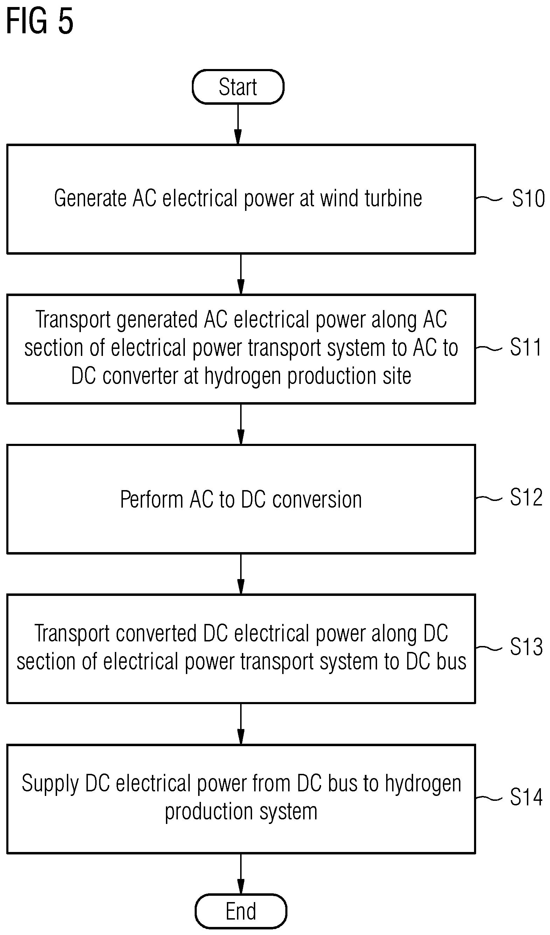

Fig. 5 is a flow-diagram illustrating a method according to an embodiment. In step S10, AC electrical power is generated at the wind turbine, e.g. wind turbine 201, 202, 203. The generated AC electrical power is transported along the AC section 20 of the electrical power transport system 10 to the AC-to-DC converter 30, which may be arranged at the site of the hydrogen production system 60. AC-to-DC conversion is performed in step S12. In step S13, the converted DC electrical power given out by the AC-to-DC converter 30 is transported along the DC section 40 of the electrical power transport system to the DC bus 50. From the DC bus 50, the electrical power is then supplied to the hydrogen production system 60, for example to one or more electrolyzers 61, 62, ... . It should be clear that the respective method may be performed continuously during operation of the one or more wind turbines and of the hydrogen production system 60.

By means of the system and method disclosed herein, it may be possible that a power converter, and optionally a transformer, can be omitted in the wind turbine. This may result in a cost reduction and increased efficiency. Furthermore, due to the variable AC frequency, the power can be transported at a lower frequency in the AC section 20, which may further reduce AC cable losses. The centralization of the hydrogen production system results in further advantages, such as a centralized water supply and centralized hydrogen collection.

While specific embodiments are disclosed herein, various changes and modifications can be made without departing from the scope of the invention, which is defined by the claims. The present embodiments are to be considered in all respects as illustrative and non-restrictive .

## Claims

1. A system configured to provide electrical power from a wind turbine (201) to a hydrogen production system (60), wherein the system (100) comprises at least one electrical power transport system (10), wherein the electrical power transport system (10) is associated with the wind turbine (201) and provides an electrical power transport path configured to transport electrical power from a generator (70) of the associated wind turbine (201) to the hydrogen production system (60), wherein the electrical power transport system (10) comprises:
- an AC section (20) coupled to the generator (70);
- a DC section (40) coupled to the hydrogen production system (60); and
- an AC to DC converter (30) coupled between the AC section (20) and the DC section (40), the AC to DC converter (30) being arranged outside the wind turbine (201), wherein the AC section (20) of the electrical power transport system (10) is configured to operate at variable AC frequency,
**characterized in that** the system (100) comprises at least two electrical power transport systems (10-13), each electrical power transport system (10-13) being associated with a different wind turbine (201, 202),
wherein the DC section (40) of a first of said at least two electrical power transport systems (10-13) and the DC section (40) of a second of said at least two electrical power transport systems (10-13) are electrically coupled and are configured to supply electrical power to the hydrogen production system (60), and
wherein the AC sections of the at least two electrical power transport systems are electrically separated from each other.

2. The system according to claim 1, wherein the AC to DC converter (30) is installed at a site of the hydrogen production system (60) and/or wherein the AC section (20) of the electrical power transport path is configured to transport the electrical power from the generator (70) to the site of the hydrogen production system (60).

3. The system according to claim 1 or 2, wherein the system comprises a DC bus (50), wherein the DC section (20) of each of the at least two electrical power transport systems (10-13) is electrically coupled to the DC bus (50), and wherein the hydrogen production system (60) is electrically coupled to the DC bus (50).

4. The system according to claim 3, wherein the DC bus (50) is provided by a DC busbar, wherein preferably, the DC bus comprises bus sections (51-53) and a bus coupler (55-57) provided between the bus sections (51-53), wherein the DC section (40) of each electrical power transport system (10-13) is coupled to a different bus section (51-53).

5. The system according to claim 4, wherein the hydrogen production system (60) comprises plural electrolyzers (61-67), wherein at least one electrolyzer (61, 62, 63) is coupled to each of two or more of said bus sections (51, 52, 53).

6. The system according to any of the preceding claims, wherein the AC section (20) of the electrical power transport system (10) comprises a transformer (22) configured to provide transformation from a higher AC transport voltage to a lower AC voltage, wherein the lower voltage side of the transformer (22) is coupled to the AC to DC converter (30).

7. The system according to claim 6, wherein the transformer (22) is arranged outside the wind turbine, preferably at a site of the hydrogen production system (60).

8. The system according to any of the preceding claims, wherein the AC section (20) of the electrical power transport system (10) comprises a wind turbine transformer (23) configured to provide transformation from a lower AC voltage output by the generator (70) to a higher AC transport voltage.

9. The system according to any of claims 6-8, wherein the AC transport voltage is higher than 1 kV, preferably higher than 2 kV, more preferably higher than 10 kV.

10. The system according to any of the preceding claims, wherein the generator (70) coupled to the electrical power transport system (10) is a high voltage generator, wherein the high voltage generator preferably provides an AC output voltage above 1 kV, preferably above 2 kV, more preferably above 5 kV.

11. The system according to any of the preceding claims, wherein the generator (70) is configured to provide a constant output voltage, or wherein the generator (70) is configured to provide a variable output voltage that varies with generator speed.

12. The system according to any of the preceding claims,
wherein the hydrogen production system (60) comprises a central electrolyzer configured to receive electrical power from plural electrical power transport systems (10-13) each associated with a respective wind turbine (201-203), or
wherein the hydrogen production system (60) is a modular electrolyzer system comprising plural electrolyzers (61-67) configured to receive electrical power from plural electrical power transport systems (10-13) each associated with a respective wind turbine (201-203).

13. The system according to any of the preceding claims,
wherein the system further comprises a control system (90) configured to control the operation of the hydrogen production system (60), the hydrogen production system (60) comprising plural electrolyzers (61-67), wherein the control system (90) is configured to activate or deactivate electrolyzers (61-67) in dependence on the availability of electrical power provided by the at least one electrical power transport system to the hydrogen production system (60),
and/or wherein the control system is configured to adjust the power intake of one or more the electrolyzers (61-67) of the hydrogen production system (60) in dependence on the availability of electrical power provided by the at least one electrical power transport system.

14. A method of providing electrical power from a wind turbine (201) to a hydrogen production system (60), wherein the system comprises at least one electrical power transport system (10), wherein the electrical power transport system (10) is associated with the wind turbine (201) and provides an electrical power transport path configured to transport electrical power from a generator (70) of the associated wind turbine (201) to the hydrogen production system (60), wherein the method comprises:
- providing AC electrical power from the generator (70) along an AC section (20) of the electrical power transport system (10) to an AC to DC converter (30) of the electrical power transport system (10);
- converting, by the AC to DC converter (30), the AC electrical power to DC electrical power; and
- providing DC electrical power from the AC to DC converter (30) along a DC section (40) of the electrical power transport system (10) to the hydrogen production system (60),
wherein the AC to DC converter (30) is arranged outside the wind turbine (201),
wherein the AC section (20) of the electrical power transport system (10) is configured to operate at variable AC frequency,
**characterized in that** the system comprises at least two electrical power transport systems (10-13), each electrical power transport system (10-13) being associated with a different wind turbine (201, 202),
wherein the DC section (40) of a first of said at least two electrical power transport systems (10-13) and the DC section (40) of a second of said at least two electrical power transport systems (10-13) are electrically coupled and are configured to supply electrical power to the hydrogen production system (60), and
wherein the AC sections of the at least two electrical power transport systems are electrically separated from each other.

## Patentansprüche

1. System, das dazu ausgelegt ist, elektrischen Strom von einer Windturbine (201) an ein Wasserstofferzeugungssystem (60) bereitzustellen, wobei das System (100) mindestens ein Transportsystem (10) für elektrischen Strom umfasst, wobei das Transportsystem (10) für elektrischen Strom mit der Windturbine (201) assoziiert ist und einen Transportpfad für elektrischen Strom bereitstellt, der dazu ausgelegt ist, elektrischen Strom von einem Generator (70) der assoziierten Windturbine (201) an das Wasserstofferzeugungssystem (60) zu transportieren, wobei das Transportsystem (10) für elektrischen Strom Folgendes umfasst:
- einen AC-Abschnitt (20), der mit dem Generator (70) gekoppelt ist;
- einen DC-Abschnitt (40), der mit dem Wasserstofferzeugungssystem (60) gekoppelt ist; und
- einen AC/DC-Wandler (30), der zwischen den AC-Abschnitt (20) und den DC-Abschnitt (40) gekoppelt ist, wobei der AC/DC-Wandler (30) außerhalb der Windturbine (201) angeordnet ist, wobei der AC-Abschnitt (20) des Transportsystems (10) für elektrischen Strom dazu ausgelegt ist, mit einer variablen Wechselstromfrequenz zu arbeiten,
**dadurch gekennzeichnet, dass** das System (100) mindestens zwei elektrische Transportsysteme (10-13) für elektrischen Strom umfasst, wobei jedes Transportsystem (10-13) für elektrischen Strom mit einer anderen Windturbine (201, 202) assoziiert ist,
wobei der DC-Abschnitt (40) eines ersten der mindestens zwei Transportsysteme (10-13) für elektrischen Strom und der DC-Abschnitt (40) eines zweiten der mindestens zwei Transportsysteme (10-13) für elektrischen Strom elektrisch gekoppelt sind und dazu ausgelegt sind, dem Wasserstofferzeugungssystem (60) elektrischen Strom zuzuführen, und
wobei die AC-Abschnitte der mindestens zwei Transportsysteme für elektrischen Strom elektrisch voneinander getrennt sind.

2. System nach Anspruch 1, wobei der AC/DC-Wandler (30) an einem Standort des Wasserstofferzeugungssystems (60) installiert ist und/oder wobei der AC-Abschnitt (20) des Transportpfads für elektrischen Strom dazu ausgelegt ist, den elektrische Strom von dem Generator (70) zu dem Standort des Wasserstofferzeugungssystems (60) zu transportieren.

3. System nach Anspruch 1 oder 2, wobei das System einen DC-Bus (50) umfasst, wobei der DC-Abschnitt (20) jedes der mindestens zwei Transportsysteme (10-13) für elektrischen Strom elektrisch mit dem DC-Bus (50) gekoppelt ist und wobei das Wasserstofferzeugungssystem (60) elektrisch mit dem DC-Bus (50) gekoppelt ist.

4. System nach Anspruch 3, wobei der DC-Bus (50) durch eine DC-Sammelschiene bereitgestellt wird, wobei vorzugsweise der DC-Bus Busabschnitte (51-53) und einen Buskoppler (55-57) umfasst, der zwischen den Busabschnitten (51-53) bereitgestellt ist, wobei der DC-Abschnitt (40) jedes Transportsystems (10-13) für elektrischen Strom mit einem anderen Busabschnitt (51-53) gekoppelt ist.

5. System nach Anspruch 4, wobei das Wasserstofferzeugungssystem (60) mehrere Elektrolyseure (61-67) umfasst, wobei mindestens ein Elektrolyseur (61, 62, 63) mit jedem von zwei oder mehr der Busabschnitte (51, 52, 53) gekoppelt ist.

6. System nach einem der vorhergehenden Ansprüche, wobei der AC-Abschnitt (20) des Transportsystems (10) für elektrischen Strom einen Transformator (22) umfasst, der dazu ausgelegt ist, eine Transformation von einer höheren AC-Transportspannung zu einer niedrigeren AC-Spannung bereitzustellen, wobei die Seite der niedrigeren Spannung des Transformators (22) mit dem AC-DC-Wandler (30) gekoppelt ist.

7. System nach Anspruch 6, wobei der Transformator (22) außerhalb der Windturbine, vorzugsweise an einem Standort des Wasserstofferzeugungssystems (60), angeordnet ist.

8. System nach einem der vorhergehenden Ansprüche, wobei der AC-Abschnitt (20) des Transportsystems (10) für elektrischen Strom einen Windturbinentransformator (23) umfasst, der dazu ausgelegt ist, eine Transformation von einer niedrigeren AC-Spannung, die durch den Generator (70) ausgegeben wird, zu einer höheren AC-Transportspannung bereitzustellen.

9. System nach einem der Ansprüche 6-8, wobei die AC-Transportspannung höher als 1 kV, vorzugsweise höher als 2 kV, mehr bevorzugt höher als 10 kV ist.

10. System nach einem der vorhergehenden Ansprüche, wobei der Generator (70), der mit dem Transportsystem (10) für elektrischen Strom gekoppelt ist, ein Hochspannungsgenerator ist, wobei der Hochspannungsgenerator vorzugsweise eine AC-Ausgangsspannung über 1 kV, vorzugsweise über 2 kV, mehr bevorzugt über 5 kV bereitstellt.

11. System nach einem der vorhergehenden Ansprüche, wobei der Generator (70) dazu ausgelegt ist, eine konstante Ausgangsspannung bereitzustellen, oder wobei der Generator (70) dazu ausgelegt ist, eine variable Ausgangsspannung bereitzustellen, die mit der Generatorgeschwindigkeit variiert.

12. System nach einem der vorhergehenden Ansprüche, wobei das Wasserstofferzeugungssystem (60) einen zentralen Elektrolyseur umfasst, der dazu ausgelegt ist, elektrischen Strom von mehreren Transportsystemen (10-13) für elektrischen Strom zu empfangen, die jeweils mit einer jeweiligen Windturbine (201-203) assoziiert sind, oder wobei das Wasserstofferzeugungssystem (60) ein modulares Elektrolyseursystem ist, das mehrere Elektrolyseure (61-67) umfasst, die dazu ausgelegt sind, elektrischen Strom von mehreren Transportsystemen (10-13) für elektrischen Strom zu empfangen, die jeweils mit einer jeweiligen Windturbine (201-203) assoziiert sind.

13. System nach einem der vorhergehenden Ansprüche, wobei das System ferner ein Steuersystem (90) umfasst, das dazu ausgelegt ist, den Betrieb des Wasserstofferzeugungssystems (60) zu steuern, wobei das Wasserstofferzeugungssystem (60) mehrere Elektrolyseure (61-67) umfasst, wobei das Steuersystem (90) dazu ausgelegt ist, Elektrolyseure (61-67) in Abhängigkeit von der Verfügbarkeit von elektrischem Strom, der durch das mindestens eine Transportsystem für elektrischen Strom an das Wasserstofferzeugungssystem (60) bereitgestellt wird, zu aktivieren oder zu deaktivieren, und/oder wobei das Steuersystem dazu ausgelegt ist, die Stromaufnahme eines oder mehrerer der Elektrolyseure (61-67) des Wasserstofferzeugungssystems (60) in Abhängigkeit von der Verfügbarkeit von elektrischem Strom, der durch das mindestens eine Transportsystem für elektrischen Strom bereitgestellt wird, anzupassen.

14. Verfahren zum Bereitstellen von elektrischem Strom von einer Windturbine (201) an ein Wasserstofferzeugungssystem (60), wobei das System mindestens ein Transportsystem (10) für elektrischen Strom umfasst, wobei das Transportsystem (10) für elektrischen Strom mit der Windturbine (201) assoziiert ist und einen Transportpfad für elektrischen Strom bereitstellt, der dazu ausgelegt ist, elektrischen Strom von einem Generator (70) der assoziierten Windturbine (201) zu dem Wasserstofferzeugungssystem (60) zu transportieren, wobei das Verfahren Folgendes umfasst:
- Bereitstellen von elektrischem Wechselstrom von dem Generator (70) entlang eines AC-Abschnitts (20) des Transportsystems (10) für elektrischen Strom an einen AC/DC-Wandler (30) des Transportsystems (10) für elektrischen Strom;
- Umwandeln, durch den AC/DC-Wandler (30), des elektrischen Wechselstroms in elektrischen Gleichstrom; und
- Bereitstellen von elektrischem Gleichstrom von dem AC/DC-Wandler (30) entlang eines DC-Abschnitts (40) des Transportsystems (10) für elektrischen Strom an das Wasserstofferzeugungssystem (60),
wobei der AC/DC-Wandler (30) außerhalb der Windturbine (201) angeordnet ist,
wobei der AC-Abschnitt (20) des Transportsystems (10) für elektrischen Strom dazu ausgelegt ist, bei einer variablen AC-Frequenz zu arbeiten,
**dadurch gekennzeichnet, dass** das System mindestens zwei Transportsysteme (10-13) für elektrischen Strom umfasst, wobei jedes Transportsystem (10-13) für elektrischen Strom mit einer anderen Windturbine (201, 202) assoziiert ist,
wobei der DC-Abschnitt (40) eines ersten der mindestens zwei Transportsysteme (10-13) für elektrischen Strom und der DC-Abschnitt (40) eines zweiten der mindestens zwei Transportsysteme (10-13) für elektrischen Strom elektrisch gekoppelt sind und dazu ausgelegt sind, dem Wasserstofferzeugungssystem (60) elektrischen Strom zuzuführen, und
wobei die AC-Abschnitte der mindestens zwei Transportsysteme für elektrischen Strom elektrisch voneinander getrennt sind.

## Revendications

1. Système configuré pour fournir de l'énergie électrique d'une éolienne (201) à un système de production d'hydrogène (60), dans lequel le système (100) comprend au moins un système de transport d'énergie électrique (10), dans lequel le système de transport d'énergie électrique (10) est associé à l'éolienne (201) et fournit un chemin de transport d'énergie électrique configuré pour transporter de l'énergie électrique d'un générateur (70) de l'éolienne (201) associée au système de production d'hydrogène (60), dans lequel le système de transport d'énergie électrique (10) comprend :
- une section CA (20) couplée au générateur (70) ;
- une section CC (40) couplée au système de production d'hydrogène (60) ; et
- un convertisseur CA-CC (30) couplé entre la section CA (20) et la section CC (40), le convertisseur CA-CC (30) étant agencé à l'extérieur de l'éolienne (201), dans lequel la section CA (20) du système de transport d'énergie électrique (10) est configurée pour fonctionner à une fréquence CA variable,
**caractérisé en ce que** le système (100) comprend au moins deux systèmes de transport d'énergie électrique (10-13), chaque système de transport d'énergie électrique (10-13) étant associé à une éolienne (201, 202) différente,
dans lequel la section CC (40) d'un premier desdits au moins deux systèmes de transport d'énergie électrique (10-13) et la section CC (40) d'un deuxième desdits au moins deux systèmes de transport d'énergie électrique (10-13) sont couplés électriquement et sont configurés pour fournir une énergie électrique au système de production d'hydrogène (60), et
dans lequel les sections CA des au moins deux systèmes de transport d'énergie électrique sont séparés électriquement l'une de l'autre.

2. Système selon la revendication 1, dans lequel le convertisseur CA-CC (30) est installé au niveau d'un site du système de production d'hydrogène (60) et/ou dans lequel la section CA (20) du chemin de transport d'énergie électrique est configurée pour transporter l'énergie électrique du générateur (70) vers le site du système de production d'hydrogène (60).

3. Système selon la revendication 1 ou 2, dans lequel le système comprend un bus CC (50), dans lequel la section CC (20) de chacun des au moins deux systèmes de transport d'énergie électrique (10-13) est couplée électriquement au bus CC (50), et dans lequel le système de production d'hydrogène (60) est couplé électriquement au bus CC (50).

4. Système selon la revendication 3, dans lequel le bus CC (50) est fourni par une barre omnibus CC, dans lequel de préférence, le bus CC comprend des sections de bus (51-53) et un coupleur de bus (55-57) fourni entre les sections de bus (51-53), dans lequel la section CC (40) de chaque système de transport d'énergie électrique (10-13) est couplée à une section de bus (51-53) différente.

5. Système selon la revendication 4, dans lequel le système de production d'hydrogène (60) comprend plusieurs électrolyseurs (61-67), dans lequel au moins un électrolyseur (61, 62, 63) est couplé à chacune desdites deux ou plus sections de bus (51, 52, 53).

6. Système selon l'une quelconque des revendications précédentes, dans lequel la section CA (20) du système de transport d'énergie électrique (10) comprend un transformateur (22) configuré pour fournir une transformation d'une tension CA de transport supérieure à une tension CA inférieure, dans lequel le côté tension inférieure du transformateur (22) est couplé au convertisseur CA-CC (30).

7. Système selon la revendication 6, dans lequel le transformateur (22) est agencé à l'extérieur de l'éolienne, de préférence au niveau d'un site du système de production d'hydrogène (60).

8. Système selon l'une quelconque des revendications précédentes, dans lequel la section CA (20) du système de transport d'énergie électrique (10) comprend un transformateur d'éolienne (23) configuré pour fournir une transformation d'une tension CA inférieure sortie par le générateur (70) à une tension CA de transport supérieure.

9. Système selon l'une quelconque des revendications 6 à 8, dans lequel la tension CA de transport est supérieure à 1 kV, de préférence supérieure à 2 kV, plus préférablement supérieure à 10 kV.

10. Système selon l'une quelconque des revendications précédentes, dans lequel le générateur (70) couplé au système de transport d'énergie électrique (10) est un générateur de haute tension, dans lequel le générateur de haute tension fournit de préférence une tension CA de sortie supérieure à 1 kV, de préférence supérieure à 2 kV, plus préférablement supérieure à 5 kV.

11. Système selon l'une quelconque des revendications précédentes, dans lequel le générateur (70) est configuré pour fournir une tension de sortie constante, ou dans lequel le générateur (70) est configuré pour fournir une tension de sortie variable qui varie avec la vitesse de générateur.

12. Système selon l'une quelconque des revendications précédentes, dans lequel le système de production d'hydrogène (60) comprend un électrolyseur central configuré pour recevoir une énergie électrique de plusieurs systèmes de transport d'énergie électrique (10-13) chacun associé à une éolienne (201-203) respective, ou dans lequel le système de production d'hydrogène (60) est un système d'électrolyseur modulaire comprenant plusieurs électrolyseurs (61-67) configurés pour recevoir une énergie électrique de plusieurs systèmes de transport d'énergie électrique (10-13) chacun associé à une éolienne (201-203) respective.

13. Système selon l'une quelconque des revendications précédentes, dans lequel le système comprend en outre un système de commande (90) configuré pour commander le fonctionnement du système de production d'hydrogène (60), le système de production d'hydrogène (60) comprenant plusieurs électrolyseurs (61-67), dans lequel le système de commande (90) est configuré pour activer ou désactiver des électrolyseurs (61-67) en fonction de la disponibilité d'une énergie électrique fournie par l'au moins un système de transport d'énergie électrique au système de production d'hydrogène (60), et/ou dans lequel le système de commande est configuré pour ajuster l'absorption d'énergie d'un ou plusieurs des électrolyseurs (61-67) du système de production d'hydrogène (60) en fonction de la disponibilité d'une énergie électrique fournie par l'au moins un système de transport d'énergie électrique.

14. Procédé de fourniture d'une énergie électrique d'une éolienne (201) à un système de production d'hydrogène (60), dans lequel le système comprend au moins un système de transport d'énergie électrique (10), dans lequel le système de transport d'énergie électrique (10) est associé à l'éolienne (201) et fournit un chemin de transport d'énergie électrique configuré pour transporter une énergie électrique d'un générateur (70) de l'éolienne (201) associée au système de production d'hydrogène (60), dans lequel le procédé comprend :
- la fourniture d'une énergie électrique CA du générateur (70) le long d'une section CA (20) du système de transport d'énergie électrique (10) à un convertisseur CA-CC (30) du système de transport d'énergie électrique (10) ;
- la conversion, par le convertisseur CA-CC (30), de l'énergie électrique CA en énergie électrique CC ; et
- la fourniture de l'énergie électrique CC du convertisseur CA-CC (30) le long d'une section CC (40) du système de transport d'énergie électrique (10) au système de production d'hydrogène (60),
dans lequel le convertisseur CA-CC (30) est agencé à l'extérieur de l'éolienne (201),
dans lequel la section CA (20) du système de transport d'énergie électrique (10) est configurée pour fonctionner à une fréquence CA variable,
**caractérisé en ce que** le système comprend au moins deux système de transport d'énergie électrique (10-13), chaque système de transport d'énergie électrique (10-13) étant associé à une éolienne (201, 202) différente,
dans lequel la section CC (40) d'un premier desdits au moins deux systèmes de transport d'énergie électrique (10-13) et la section CC (40) d'un deuxième des au moins deux systèmes de transport d'énergie électrique (10-13) sont couplées électriquement et sont configurées pour fournir une énergie électrique au système de production d'hydrogène (60), et
dans lequel les sections CA des au moins deux systèmes de transport d'énergie électrique sont séparées électriquement l'une de l'autre.
